# EUROPEAN PATENT APPLICATION

(11) **EP 3 904 479 A1**
(43) Date of publication of application: **03.11.2021**
(21) Application number: 19903580.9
(22) Date of filing: 25.12.2019
(51) Int. Cl.: C09J 7/38, B32B 27/00, B32B 27/30, C09J 7/35, C09J 153/00

(54) **LAMINATE HAVING STRUCTURE INCLUDING THROUGH-HOLE**

(30) Priority: 27.12.2018 JP 2018245072
(71) Applicant: Kuraray Co., Ltd., Kurashiki-shi, Okayama 710-0801 (JP)
(72) Inventor: ONO, Tomohiro, Tsukuba-shi, Ibaraki 305-0841 (JP); NAKADA, Kanayo, Tsukuba-shi, Ibaraki 305-0841 (JP); AKAI, Makoto, Tsukuba-shi, Ibaraki 305-0841 (JP)
(74) Representative: Müller-Boré & Partner Patentanwälte PartG mbB
(86) International application number: PCT/JP2019/051017
(87) International publication number: WO 2020/138238

(57) **Abstract**

A laminate is provided which includes a structural body including a base portion and a through hole and which can concurrently satisfy operability and stickiness during processes such as fitting, can be released with no or little adhesive residue, and also exhibits excellent adhesion to various adherends, especially metals. The laminate includes a substrate and a structural body disposed on the surface of at least one side of the substrate, the structural body including a base portion and a through hole. The base portion of the structural body includes an acrylic triblock copolymer (I) that includes two polymer blocks (A1) and (A2) each including methacrylic acid ester units and one polymer block (B) including acrylic acid ester units represented by the general formula CH₂=CH-COOR¹ (1) (wherein R¹ denotes a C1-C3 organic group). The acrylic triblock copolymer (I) has an (A1)-(B)-(A2) block structure and a weight average molecular weight of 50,000 to 250,000. The total content of the polymer blocks (A1) and (A2) is not more than 35 mass% of the acrylic triblock copolymer (I).

## Description

### TECHNICAL FIELD

The present invention relates to laminates that have a structural body which includes a base portion including an acrylic triblock copolymer, and through holes.

### BACKGROUND ART

Perforated structural bodies are conventionally fabricated by methods such as, for example, pinholing or other post-processing of solid bodies such as sheets, or by punching fibrous materials. Unfortunately, the production of these structural bodies is laborious.

An approach to solving this troublesome problem is a laminate which includes a substrate sheet and one or more perforated thermoplastic elastomer layers that are mold-printed on the surface of one side or both sides of the substrate sheet (see, for example, Patent Literature 1).

The structural bodies such as sheets are sometimes made of elastomers. In such cases, stickiness is one of the performances expected to benefit from the elastomer's softness. Operations such as alignment often require that the elastomeric structural bodies be fitted reliably.

A sticking performance that is occasionally required is adhesion with respect to various adherends, in particular, high adhesion to metals. Elastomeric structural bodies are sometimes attached to plasticizer-rich soft polyvinyl chlorides (PVC) used as general sheets. A frequent requirement in such cases is to control the decrease in sticking performance due to the migration of plasticizers.

### CITATION LIST

### PATENT LITERATURE

Patent Literature 1: JP-A-2009-072986

### SUMMARY OF INVENTION

### TECHNICAL PROBLEM

Fitting tends to be facilitated with increasing stickiness. Additives such as tackifier resins and plasticizers are frequently added for the purpose of enhancing the stickiness with respect to various adherends. This approach tends to increase the probability of adhesive residue when the structural body is released, for example, temporarily released for alignment. In particular, release such as temporal release for alignment is more likely to result in adhesive residue when, for example, the structural body is fitted to a plasticizer-rich soft polyvinyl chloride. It has been difficult to produce structural bodies that satisfy all of these characteristics.

An object of the present invention is to provide a laminate which includes a structural body including a base portion and through holes and which can concurrently satisfy operability and stickiness during processes such as fitting, can be released with no or little adhesive residue, and also exhibits excellent adhesion to various adherends, especially metals.

### SOLUTION TO PROBLEM

In some aspects of the present invention, the above object is achieved by:
[1] A laminate including a substrate and a structural body disposed on the surface of at least one side of the substrate, the structural body including a base portion and a through hole, wherein
   the base portion of the structural body includes an acrylic triblock copolymer (I) including two polymer blocks (A1) and (A2) each including methacrylic acid ester units and one polymer block (B) including acrylic acid ester units represented by the general formula CH₂=CH-COOR¹ (1) (wherein R¹ denotes a C1-C3 organic group), the acrylic triblock copolymer (I) having an (A1)-(B)-(A2) block structure and a weight average molecular weight of 50,000 to 250,000, the total content of the polymer blocks (A1) and (A2) being not more than 35 mass% of the acrylic triblock copolymer (I).
[2] A hot-melt adhesive member including the laminate described in [1].

### ADVANTAGEOUS EFFECTS OF INVENTION

The laminate obtained in the present invention includes a substrate and a structural body including a base portion and a through hole and can concurrently satisfy operability and stickiness during processes such as fitting, can be released with no or little adhesive residue, and also exhibits excellent adhesion to various adherends, especially metals.

### DESCRIPTION OF EMBODIMENTS

Hereinbelow, the present invention will be described in detail. In the present specification, "(meth)acrylic acid esters" is a general term for "methacrylic acid esters" and "acrylic acid esters", and "(meth)acrylic" is a general term for "methacrylic" and "acrylic".

A laminate of the present invention has a structural body which includes a base portion including an acrylic triblock copolymer (I), and through holes. By virtue of the structural body including the above base portion and through holes, the laminate is not only excellent in breathability but also exhibits excellent operability and stickiness during processes such as fitting. Further, adhesive residue can be prevented.

In a preferred embodiment, the structural body is composed of a base portion which is a continuous network including an acrylic triblock copolymer (I), and through holes. The laminate having such a structure not only attains higher breathability but also exhibits still enhanced operability and stickiness during processes such as fitting. Further, adhesive residue can be prevented more efficiently. Furthermore, such a laminate exhibits high adhesion with respect to various adherends, especially metals.

Examples of the network shapes include mesh shapes, honeycomb shapes, scale shapes and tile shapes. For example, the structural body may be dotted or striped with discrete through holes.

The portion of the above structural body other than the through holes (the base portion) includes an acrylic triblock copolymer (I). The acrylic triblock copolymer (I) includes two polymer blocks (A1) and (A2) each including methacrylic acid ester units, and one polymer block (B) including acrylic acid ester units represented by the general formula CH₂=CH-COOR¹ (1) (wherein R¹ denotes a C1-C3 organic group). The acrylic triblock copolymer (I) has an (A1)-(B)-(A2) block structure and a weight average molecular weight of 50,000 to 250,000. The total content of the polymer blocks (A1) and (A2) is not more than 35 mass% of the copolymer.

By virtue of the acrylic triblock copolymer (I) forming the base portion of the structural body, the laminate that includes such a structural body not only exhibits excellent operability and stickiness during processes such as fitting but also can improve the adhesive residue problem which is easily caused by the migration of plasticizers contained in adherends, and also exhibits excellent adhesion with respect to various adherends, especially metals.

### (Polymer blocks (A1) and (A2))

The acrylic triblock copolymer (I) has two polymer blocks including methacrylic acid ester units, namely, polymer block (A1) and (A2) each including methacrylic acid ester units.

Examples of the methacrylic acid esters which form structural units of the polymer blocks (A1) and (A2) include methacrylic acid esters having no functional groups such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate and benzyl methacrylate; and methacrylic acid esters having a functional group such as methoxyethyl methacrylate, ethoxyethyl methacrylate, diethylaminoethyl methacrylate, 2-hydroxyethyl methacrylate, 2-aminoethyl methacrylate, glycidyl methacrylate and tetrahydrofurfuryl methacrylate.

Among those described above, methacrylic acid esters having no functional groups are preferable to enhance the heat resistance and durability of the polymer that is obtained. Methyl methacrylate, ethyl methacrylate, tert-butyl methacrylate, cyclohexyl methacrylate, isobornyl methacrylate and phenyl methacrylate are more preferable. Methyl methacrylate is still more preferable for the reason that the phase separation between the polymer blocks (A1) and (A2) and the polymer block (B) becomes clearer, and the perforated structural body which includes a base portion containing such an acrylic triblock copolymer (I) attains a higher cohesive force. The polymer blocks (A1) and (A2) may be composed of a single kind of a methacrylic acid ester or may be composed of two or more kinds of methacrylic acid esters. The acrylic triblock copolymer (I) has two polymer blocks (A1) and (A2) as polymer blocks including methacrylic acid ester units. The methacrylic acid esters constituting these polymer blocks (A1) and (A2) may be the same as or different from one another. Further, the proportions of the methacrylic acid ester units present in the polymer blocks (A1) and (A2) are preferably not less than 60 mass% in each of the polymer blocks (A1) and (A2), more preferably not less than 80 mass%, still more preferably not less than 90 mass%, and further preferably not less than 95 mass%. The proportions of the methacrylic acid ester units in the polymer blocks (A1) and (A2) may be each 100 mass%.

In the polymer blocks (A1) and (A2) each including methacrylic acid ester units, the methacrylic acid ester units may have the same stereoregularity or different stereoregularities.

In the acrylic triblock copolymer (I), the total content of the polymer blocks (A1) and (A2) is not more than 35 mass%, and preferably not more than 32 mass%. The total content of the polymer blocks (A1) and (A2) is preferably not less than 4 mass%, and more preferably not less than 8 mass%. When the total content of the polymer blocks (A1) and (A2) is in the above range, the laminate that includes a perforated structural body which includes a base portion containing such an acrylic triblock copolymer (I) tends to exhibit excellent operability and stickiness, to be capable of improving the adhesive residue problem which is easily caused by the migration of plasticizers contained in adherends, and also to exhibit excellent adhesion with respect to various adherends, especially metals. The respective contents of the polymer blocks (A1) and (A2) present in the acrylic triblock copolymer (I) may be the same as or different from each other.

The glass transition temperatures (Tg) of the polymer blocks (A1) and (A2) are preferably each 60 to 140°C, more preferably 70 to 130°C, and still more preferably 80 to 130°C. When the glass transition temperatures are in this range, the polymer blocks (A1) and (A2) act as physical pseudo-crosslinking sites and produce a cohesive force at normal service temperatures of the laminate of the present invention, and the laminate that is obtained exhibits excellent properties such as durability and heat resistance. The glass transition temperature in the present specification is the extrapolated onset temperature determined with respect to a DSC curve.

The respective temperatures Tg of the polymer blocks (A1) and (A2) may be the same as or different from each other. In a preferred embodiment, the temperatures Tg of the polymer blocks (A1) and (A2) may be different from each other but both fall in the range described above.

### (Polymer block (B))

The acrylic triblock copolymer (I) has one polymer block (B) including acrylic acid ester units represented by the general formula CH₂=CH-COOR¹ (1) (wherein R¹ denotes a C1-C3 organic group) (hereinafter, such units are also written as the acrylic acid ester (1) units). By virtue of the acrylic acid ester (1) units being contained in the polymer block (B), the laminate that is obtained is imparted with stickiness while being capable of improving the adhesive residue problem which is easily caused by the migration of plasticizers contained in adherends, and also exhibits excellent adhesion with respect to various adherends, especially metals.

Examples of the acrylic acid esters (1) include acrylic acid esters having no functional groups such as methyl acrylate, ethyl acrylate, isopropyl acrylate and n-propyl acrylate; and acrylic acid esters having a functional group such as 2-methoxyethyl acrylate, 2-hydroxyethyl acrylate, 2-aminoethyl acrylate and glycidyl acrylate.

Among those described above, acrylic acid esters having no functional groups are preferable for the reason that the acrylic triblock copolymer (I) that is obtained attains higher plasticizer resistance and also from the points of view of transparency, flexibility and adhesion to adherends. From the same viewpoints, methyl acrylate and ethyl acrylate are more preferable, and methyl acrylate is still more preferable. The esters described above may be used singly, or two or more may be used in combination.

In a preferred embodiment, the acrylic acid ester units constituting the polymer block (B) further include acrylic acid ester (2) units represented by the general formula CH₂=CH-COOR² (2) (wherein R² denotes a C4-C12 organic group).

Examples of the acrylic acid esters (2) include acrylic acid esters having no functional groups such as n-butyl acrylate, isobutyl acrylate, sec-butyl acrylate, tert-butyl acrylate, n-pentyl acrylate, isopentyl acrylate, n-hexyl acrylate, 2-ethylhexyl acrylate, n-octyl acrylate, isooctyl acrylate, decyl acrylate, isobornyl acrylate, lauryl acrylate, cyclohexyl acrylate, phenyl acrylate and benzyl acrylate; and acrylic acid esters having a functional group such as 2-ethoxyethyl acrylate, 2-(diethylamino)ethyl acrylate, tetrahydrofurfuryl acrylate and 2-phenoxyethyl acrylate.

Among those described above, acrylic acid esters having no functional groups are preferable for the reasons that the phase separation between the polymer blocks (A1) and (A2) and the polymer block (B) becomes clearer and that the structural body that is obtained attains higher cohesive force and higher stickiness. For the same reasons, n-butyl acrylate and 2-ethylhexyl acrylate are more preferable, and n-butyl acrylate is still more preferable. The esters described above may be used singly, or two or more may be used in combination.

The mass ratio (1)/(2) of the acrylic acid ester (1) units to the acrylic acid ester (2) units in the polymer block (B) is preferably 95/5 to 5/95. When the mass ratio is in the above range, the acrylic acid ester (1) units offer plasticizer resistance and the acrylic acid ester (2) units impart stickiness with respect to adherends in a well balanced manner. As a result, the structural body that includes a base portion containing such an acrylic block copolymer (I) can resist plasticizer migration, and the laminate that is obtained attains excellent durability even in the case where the substrate under the structural body contains a plasticizer. From the above viewpoint, the mass ratio (1)/(2) of the acrylic acid esters is preferably 90/10 to 15/85, more preferably 90/10 to 20/80, and still more preferably 80/20 to 20/80.

In another preferred embodiment, the polymer block (B) consists solely of acrylic acid ester (1) units. The polymer block (B) consisting solely of acrylic acid ester (1) units offers further enhanced plasticizer resistance and is advantageous when, for example, a plasticizer is contained in the substrate or the like.

The lower limit of the proportion of the acrylic acid ester (1) in the polymer block (B) is preferably 15%, more preferably 25%, and still more preferably 40%.

Examples of the combinations of the acrylic acid esters used in the polymer block (B) include methyl acrylate/n-butyl acrylate, methyl acrylate/2-ethylhexyl acrylate, methyl acrylate/n-butyl acrylate/2-ethylhexyl acrylate, ethyl acrylate/n-butyl acrylate, ethyl acrylate/2-ethylhexyl acrylate, and ethyl acrylate/n-butyl acrylate/2-ethylhexyl acrylate.

When the polymer block (B) includes the acrylic acid ester (2) in addition to the acrylic acid ester (1), the proportion of all the units from the acrylic acid esters (1) and (2) is preferably not less than 60 mass% of the polymer block (B), more preferably not less than 80 mass%, and still more preferably not less than 90 mass%, and may be 100 mass%.

When the polymer block (B) is a copolymer of a plurality of monomers, the copolymer may be a random copolymer, a block copolymer or a graft copolymer, or may be a tapered block copolymer (a gradient copolymer).

The glass transition temperature of the polymer block (B) is more preferably -70 to 30°C, still more preferably -50 to 25°C, further preferably -40 to 20°C, and most preferably -30 to 15°C. When the glass transition temperature is in this range, the obtainable laminate having such a structural body is flexible at service temperatures, exhibits excellent operability and stickiness, and has high resistance to plasticizers contained in adherends or the like.

The polymer blocks (A1) and (A2) and the polymer block (B) may contain monomer units which are common to one another while ensuring that the advantageous effects of the present invention are not impaired. For example, there may be a tapered structure at the boundaries between the polymer block (A1) or (A2) and the polymer block (B). Alternatively, the polymer block (A1) or (A2) and the polymer block (B) may be of completely different monomer units from each other.

The polymer blocks (A1) and (A2) and the polymer block (B) may include additional monomers as required. Examples of such additional monomers include vinyl monomers having a carboxyl group such as (meth)acrylic acid, crotonic acid, maleic acid, maleic anhydride and fumaric acid; vinyl monomers having a functional group such as (meth)acrylamide, (meth)acrylonitrile, vinyl acetate, vinyl chloride and vinylidene chloride; aromatic vinyl monomers such as styrene, α-methylstyrene, p-methylstyrene and m-methylstyrene; conjugated diene monomers such as butadiene and isoprene; olefin monomers such as ethylene, propylene, isobutene and octene; and lactone monomers such as ε-caprolactone and valerolactone. When any of the polymer blocks contains such additional monomers, the content thereof is preferably not more than 20 mass%, more preferably not more than 10 mass%, and still more preferably not more than 5 mass% of the total mass of the monomers constituting the polymer block.

The polymer block (A1), the polymer block (B) and the polymer block (A2) are bonded in this order. That is, the acrylic triblock copolymer (I) has an (A1)-(B)-(A2) block structure in which (A1) is the polymer block (A1), (A2) is the polymer block (A2) and (B) is the polymer block (B). By virtue of the acrylic triblock copolymer (I) having this structure, the structural body attains excellent bond strength, holding power and cohesive force.

The acrylic triblock copolymer (I) has a weight average molecular weight (Mw) of 50,000 to 250,000. From the points of view of cohesive force and handleability during production, this molecular weight is preferably 50,000 to 230,000, more preferably 55,000 to 220,000, and still more preferably 60,000 to 200,000. If the Mw of the acrylic triblock copolymer (I) is less than 50,000, the cohesive force may be poor. If the Mw exceeds 250,000, low handleability may be encountered during production.

The molecular weight distribution (Mw/Mn) of the acrylic triblock copolymer (I) is preferably 1.0 to 1.5, and more preferably 1.0 to 1.4. The weight average molecular weight (Mw) and the number average molecular weight (Mn) in the present specification are the weight average molecular weight and the number average molecular weight measured by gel permeation chromatography (GPC) relative to standard polystyrenes.

The acrylic triblock copolymer (I) used in the present invention may be produced by any method without limitation in accordance with a known technique as long as the polymer that is obtained satisfies the chemical structure conditions of the present invention. In general, a block copolymer with a narrow molecular weight distribution is obtained by the living polymerization of monomers that will form structural units. Examples of the living polymerization processes include living polymerization using an organic rare earth metal complex as a polymerization initiator (see JP-A-H06-93060), living anionic polymerization performed with an organic alkali metal compound as a polymerization initiator in the presence of a mineral acid salt such as an alkali metal or alkaline earth metal salt (see JP-A-H05-507737), living anionic polymerization performed with an organic alkali metal compound as a polymerization initiator in the presence of an organoaluminum compound (see JP-A-H11-335432), and atom transfer radical polymerization (ATRP) (see Macromolecular Chemistry and Physics, 2000, vol. 201, pp. 1108-1114).

Among these production processes, living anionic polymerization performed with an organic alkali metal compound as a polymerization initiator in the presence of an organoaluminum compound is advantageous in that the obtainable block copolymer has high transparency, is less odorous because of little residual monomers, and can be applied as the base portion of the structural body while ensuring that few bubbles will be generated after the application. Other advantages are that the methacrylic acid ester polymer blocks have a highly syndiotactic molecular structure to effectively increase the heat resistance of the base portion of the structural body, and that the living polymerization is feasible under relatively mild temperature conditions and thus the environmental load in industrial production (mainly the electricity for refrigerators to control the polymerization temperature) is small.

Examples of the organoaluminum compounds include those organoaluminum compounds represented by the following general formula (3).

AlR³R⁴R⁵ (3)

(In the formula (3), R³, R⁴ and R⁵ are each independently an optionally substituted alkyl group, an optionally substituted cycloalkyl group, an optionally substituted aryl group, an optionally substituted aralkyl group, an optionally substituted alkoxy group, an optionally substituted aryloxy group or an N,N-disubstituted amino group, or R³ is any of these groups and R⁴ and R⁵ together form an optionally substituted arylenedioxy group.)

From points of view such as high living properties in the polymerization and easy handling, some preferred organoaluminum compounds represented by the general formula (3) are isobutylbis(2,6-di-tert-butyl-4-methylphenoxy)aluminum, isobutylbis(2,6-di-tert-butylphenoxy)aluminum and isobutyl[2,2'-methylenebis(4-methyl-6-tert-butylphenoxy)] aluminum.

Examples of the organic alkali metal compounds include alkyllithiums and alkyldilithiums such as n-butyllithium, sec-butyllithium, isobutyllithium, tert-butyllithium, n-pentyllithium and tetramethylenedilithium; aryllithiums and aryldilithiums such as phenyllithium, p-tolyllithium and lithiumnaphthalene; aralkyllithiums and aralkyldilithiums such as benzyllithium, diphenylmethyllithium and dilithium formed by the reaction of diisopropenylbenzene and butyllithium; lithiumamides such as lithiumdimethylamide; and lithium alkoxides such as methoxylithium and ethoxylithium. These compounds may be used singly, or two or more may be used in combination. In particular, alkyllithiums are preferable because of high polymerization initiation efficiency. Tert-butyllithium and sec-butyllithium are more preferable, and sec-butyllithium is still more preferable.

The living anionic polymerization is usually carried out in the presence of a solvent that is inactive in the polymerization reaction. Examples of the solvents include aromatic hydrocarbons such as benzene, toluene and xylene; halogenated hydrocarbons such as chloroform, methylene chloride and carbon tetrachloride; and ethers such as tetrahydrofuran and diethyl ether. Toluene is preferably used.

The block copolymer may be produced by, for example, repeating as many times as desired a step in which a desired polymer block (such as a polymer block (A2) or a polymer block (B)) is formed onto a desired living polymer end obtained by the polymerization of a monomer, and thereafter terminating the polymerization reaction. Specifically, the acrylic triblock copolymer (I) may be produced by, for example, performing polymerization with an organic alkali metal compound as a polymerization initiator in the presence of an organoaluminum compound through a plurality of steps including a first step of polymerizing a monomer for forming a first polymer block, a second step of polymerizing a monomer for forming a second polymer block, and a third step of polymerizing a monomer for forming a third polymer block, and terminating the polymerization reaction by reacting the active end of the resultant polymer with a terminator such as an alcohol. By this method, a triblock copolymer composed of polymer block (A1)-polymer block (B)-polymer block (A2) may be produced.

The polymerization temperature is preferably 0 to 100°C when the reaction forms the polymer block (A1) or (A2), and is preferably -50 to 50°C when the reaction forms the polymer block (B). If the polymerization temperature is below this range, the reaction is slow and takes a long time to complete. If, on the other hand, the polymerization temperature is higher than the above range, more living polymer ends are deactivated to broaden the molecular weight distribution or to cause a failure to obtain the desired block copolymer. The polymerization of the polymer blocks (A1) and (A2) and that of the polymer block (B) may be each accomplished in 1 second to 20 hours.

The base portion of the structural body of the present invention contains components including the acrylic triblock copolymer (I) described above. While the content of the acrylic triblock copolymer (I) relative to the components of the base portion is not particularly limited as long as the advantageous effects of the present invention are achieved, the acrylic triblock copolymer (I) preferably represents not less than 40 mass%, more preferably not less than 50 mass%, still more preferably not less than 60 mass%, and particularly preferably not less than 70 mass% of the components of the base portion, and may represent 100 mass% of the base portion. When the acrylic triblock copolymer (I) represents not less than 40 mass% of the base portion, the base portion tends to exhibit its characteristics more prominently.

The components for forming the base portion of the structural body of the present invention may include additional polymers and additives such as tackifier resins, softeners, plasticizers, heat stabilizers, light stabilizers, antistatic agents, flame retardants, foaming agents, colorants, dyes, refractive index modifiers, fillers, curing agents, lubricants, antiblocking agents, ant repellents and rodent repellents while ensuring that the advantageous effects of the present invention are not impaired. These additional polymers and additives may be used singly, or two or more may be used in combination.

Examples of the additional polymers include acrylic resins such as polymethyl methacrylate, and (meth)acrylic acid ester polymers and copolymers; olefin resins such as polyethylene, ethylene-vinyl acetate copolymer, polypropylene, polybutene-1, poly-4-methylpentene-1 and polynorbornene; ethylene ionomers; styrene resins such as polystyrene, styrene-maleic anhydride copolymer, high-impact polystyrene, AS resins, ABS resins, AES resins, AAS resins, ACS resins and MBS resins; styrene-methyl methacrylate copolymer; styrene-methyl methacrylate-maleic anhydride copolymer; polyester resins such as polyethylene terephthalate, polybutylene terephthalate and polylactic acid; polyamides such as nylon 6, nylon 66 and polyamide elastomers; polycarbonates; polyvinyl chloride; polyvinylidene chloride; polyvinyl alcohols; ethylene-vinyl alcohol copolymers; polyacetals; polyvinylidene fluoride; polyurethanes; modified polyphenylene ethers; polyphenylene sulfide; silicone rubber-modified resins; acrylic rubbers; silicone rubbers; styrenic thermoplastic elastomers such as SEPS, SEBS and SIS; and olefin rubbers such as IR, EPR and EPDM. Of these, from the point of view of the compatibility with the acrylic triblock copolymer (I) among the components for forming the base portion of the structural body, polymethyl methacrylate, (meth)acrylic acid ester polymers and copolymers, ethylene-vinyl acetate copolymer, AS resins, styrene-methyl methacrylate-maleic anhydride copolymer, polylactic acid and polyvinylidene fluoride are preferable, and polymethyl methacrylate, (meth)acrylic acid ester copolymers and styrene-methyl methacrylate-maleic anhydride copolymer are still more preferable.

Examples of the (meth)acrylic acid ester polymers and copolymers include polymethyl acrylate, poly-n-butyl acrylate, poly-2-ethylhexyl acrylate, random copolymer of methyl methacrylate and methyl acrylate, and random copolymer of methyl methacrylate and n-butyl acrylate.

The components for forming the base portion of the structural body which include the acrylic triblock copolymer (I) may be blended by any method without limitation. For example, the blend may be produced by mixing the components with use of a known mixing or kneading machine such as a kneader ruder, an extruder, a mixing roll or a Banbury mixer at a temperature in the range of 100 to 250°C. Alternatively, the blend may be produced by mixing the components in a solution in an organic solvent and thereafter distilling off the organic solvent. Particularly preferably, the components are melt-kneaded with a twin-screw extruder at a temperature in the range of 150 to 240°C, and the kneaded product is extruded and cut into a shape such as pellets.

The structural body may be produced by any method without limitation as long as the structural body that is fabricated includes a base portion including the acrylic triblock copolymer (I), and through holes. Some example methods are described below.
(1) A blend including the acrylic triblock copolymer (I) is melt-extruded to form long fibers. An aggregate of short fibers is prepared from the long fibers, and the short fibers in the aggregate are compression bonded to one another with an adhesive or by heat to form a structural body.
(2) A melt of a blend including the acrylic triblock copolymer (I) is melt-blown to form a structural body.
(3) A melt of a blend including the acrylic triblock copolymer (I) is applied onto a plate which has a patterning layer having recesses and bumps, or the blend is melted on such a plate. Thereafter, the resultant product including a base portion and through holes is peeled from the plate to give a structural body (pattern printing method).

Among those methods described above, the pattern printing method is preferably adopted to fabricate the structural body of the present invention for reasons such as that the base portion of the perforated structural body can be easily fabricated with the desired shape by selecting the shape of the recesses correspondingly to the desired shape of the base portion.

The laminate of the present invention includes a substrate and the above-described structural body including a base portion and through holes that is disposed on the surface of at least one side of the substrate.

Examples of the configurations of the laminates include two-layered laminates composed of the above-described structural body including a base portion and through holes/a substrate; three-layered laminates composed of the above-described structural body including a base portion and through holes/a substrate/the above-described structural body including a base portion and through holes; four-layered laminates composed of the above-described structural body including a base portion and through holes/a substrate/the above-described structural body including a base portion and through holes/a substrate; five-layered laminates composed of the above-described structural body including a base portion and through holes/a substrate/the above-described structural body including a base portion and through holes/a substrate/the above-described structural body including a base portion and through holes; and three-layered laminates composed of a substrate/the above-described structural body including a base portion and through holes/a substrate.

When the structural body including a base portion and through holes defines the outermost layer in the laminate of the present invention, a release layer such as, for example, polyethylene, a polypropylene film, a release-treated PET film or release paper may be provided on the outer side of the structural body.

Examples of the substrates used in the laminates include paper, resin sheets or films, and woven or nonwoven fabrics made of fibrous materials. Examples of the thermoplastic polymers used as materials for the resin sheets or films or used as the fibrous materials include polyesters, polyamides, acrylic resins, polyurethanes, polyethylenes, polypropylenes, and vinyl chloride resins such as polyvinyl chloride. The fibrous materials may be prepared from these thermoplastic polymer materials by, for example, melt-spinning of the thermoplastic polymer materials. The resin sheets or films may be prepared from these thermoplastic polymer materials by, for example, melt-extrusion of the thermoplastic polymer materials.

Examples of the fibrous materials further include natural fibers such as cotton, hemp, silk and wool; and inorganic fibers such as glass fibers and carbon fibers. By the weaving of these fibrous materials, woven fabrics such as textiles and knitted fabrics may be produced. Further, the fibrous materials may be formed into nonwoven fabrics by a mechanical method, a chemical method or a combination of such methods.

The laminate of the present invention may be obtained by stacking, on the substrate, the structural body obtained as described above which includes a base portion and through holes. The stacking methods are not particularly limited as long as the laminates of the present invention can be obtained. Some example methods are described below.
(1) A structural body including a base portion and through holes is compression bonded to a substrate with an adhesive or by heat to form a laminate.
(2) A material for forming a base portion is directly melt-blown onto a substrate by the melt-blowing method described hereinabove to form a laminate.
(3) A melt of a blend including the acrylic triblock copolymer (I) is applied onto a plate which has a patterning layer having recesses and bumps, or the blend is melted on such a plate. Thereafter, the resultant product including a base portion and through holes is peeled from the plate and is transferred in the molten state onto a substrate to form a laminate.

Among those methods described above, the method (3) in which a laminate is produced by pattern printing is preferable for reasons such as that a laminate which includes a structural body of desired shape can be easily fabricated.

The laminates obtained in the present invention concurrently satisfy operability and stickiness during processes such as fitting, and also exhibit excellent adhesion to adherends. Further, the structural bodies included in the laminates have excellent hot-melt characteristics. Thus, the laminates of the present invention may be preferably used as hot-melt adhesive members including such laminates.

The laminates of the present invention may be used in various applications. Specific examples of such applications include adhesive tapes, films and sheets for surface protection, masking, wrapping/packaging, office uses, labels, decoration/display, book binding, dicing tapes, medical/sanitary uses, laminated glasses, prevention of glass scattering, electrical insulation, holding and fixing of electronic equipment, production of semiconductors, optical display films, adhesive optical films, shielding of electromagnetic waves, and sealing materials for electric and electronic parts, and also include medical materials, filter materials, food packaging materials, housing materials, kitchen materials, and headgear materials.

The adhesive tapes, films and sheets for surface protection may be used for various materials such as metals, plastics, rubbers and wood, and specifically may be used for the surface protection of coating surfaces, metals during plastic working or deep drawing, automobile parts and optical parts. Examples of the automobile parts include coated exterior plates, wheels, mirrors, windows, lights and light covers. Examples of the optical parts include various image display devices such as liquid crystal displays, organic EL displays, plasma displays and field emission displays; optical disk constitutional films such as polarizing films, polarizing plates, retardation plates, light guide panels, diffusion plates and DVD; and fine coat faceplates for electronic/optical uses.

Exemplary uses for masking applications include masking during the manufacturing of printed wiring boards or flexible printed wiring boards; masking during a plating or soldering treatment for electronic equipment; and masking during the manufacturing of vehicles such as automobiles, during the coating of vehicles and buildings, during textile printing, and during trimming of civil engineering works.

Exemplary uses for wrapping applications include heavy material packaging, packaging for export, sealing of corrugated fiberboard boxes and sealing of cans. Examples of office uses include general use for office, and uses for sealing, mending of books, drawing and memos. Exemplary uses for label applications include price displays, merchandise displays, tags, POP, stickers, stripes, nameplates, decoration and advertisement.

Exemplary uses for label applications include labels having such substrate layers as, for example, papers such as paper, converted paper (paper subjected to aluminum deposition, aluminum lamination, varnishing, resin treatment or the like) and synthetic paper; and films made of cellophane, plastic materials, fabrics, wood or metals. Examples of the substrate layers include woodfree paper, art paper, cast-coated paper, thermal paper, foil paper, polyethylene terephthalate film, polyvinyl chloride film, OPP film, polylactic acid film, synthetic paper, thermal synthetic paper and overlaminate film.

Some example adherends for the labels include plastic products such as plastic bottles and foamed plastic cases; paper or corrugated fiberboard products such as corrugated fiberboard boxes; glass products such as glass bottles; metal products; and products made of other inorganic materials such as ceramics.

Exemplary uses for decoration/display applications include danger display seals, line tapes, wiring markings, after-glow luminous adhesive tapes and reflecting sheets.

Examples of the applications as adhesive optical films include adhesive layers formed on at least part or the entirety of one or both sides of such optical films as polarizing films, polarizing plates, retardation films, viewing angle enlarging films, luminance improving films, antireflection films, antiglare films, color filters, light guide panels, diffusion films, prism sheets, electromagnetic wave shielding films, near infrared absorbing films, functional composite optical films, films for ITO lamination, impact resistance imparting films, and visibility improving films. The adhesive optical films may be protective films used for the protection of the surface of the above optical films. The adhesive optical films are suitably used in various image display devices such as liquid crystal display devices, PDP, organic EL display devices, electronic papers, game machines and mobile terminals,

Exemplary uses for electrical insulation applications include protective covering or insulation for coils, and layer insulation such as motor/transformer layer insulation. Exemplary uses for holding and fixing of electronic equipment include carrier tapes, packaging, fixing of cathode ray tubes, splicing and rib reinforcement. Exemplary uses for the production of semiconductors include protection of silicon wafers.

Examples of the medical and sanitary uses include uses for percutaneous drugs such as analgesic antiinflammatory agents (plasters, poultices), plasters for cold, antipruritic patches and keratin softening agents; uses for various tapes such as first-aid plasters (containing germicides), surgical dressings/surgical tapes, plasters, hemostatic tapes, tapes for human waste disposal devices (artificial anus fixing tapes), tapes for stitching, antibacterial tapes, fixing tapings, self-adhesive bandages, adhesive tapes for oral mucosa, tapes for sporting, and depilatory tapes; uses for beauty such as facial packs, moistening sheets for skin round the eyes and keratin peel packs; binding uses in sanitary materials such as diapers and sheets for pets; cooling sheets, disposable body warmers, and uses for dust proofing, waterproofing and noxious insect capture.

Exemplary uses as sealing materials for electronic/electric parts include sealing materials for liquid crystal displays, organic EL displays, organic EL lights, solar cells and the like.

Examples of the laminated glass applications include automobile windshields, automobile side glasses, automobile sunroofs, automobile rear glasses and head-up display glasses.

Examples of the medical materials include diaper members, sanitary napkin members, members of surgical gowns, medical scrubs, patient scrubs and screening scrubs, members of covering cloths, gowns and drapes, supporter members, sterilization bag members, pregnancy/postpartum pads, breast pads, cap members, mask members, bed sheet members, antibacterial mats, wound care products, drug absorbers and blood absorbers.

Examples of the filter materials include dehumidifying filters, dust collecting filters, air filters, HEPA filters, liquid cartridge filters, automobile engine air cleaners, virus/bacteria removing filters and dry cleaning filters.

Examples of the food packaging materials include tray liners, towels, kitchen cloths, paper towels, dehumidifying materials, antibacterial sheets and mesh caps.

Examples of the housing materials include desk mats, table mats, table cloths, table decorations, transparent films, place mats, window films, window decorative sheets, window laces, bath curtains, cafe curtains, curtain liners, cushion floors, floor cloths, floor sheets, joint mats, anti-slip sheets, anti-slip sheets between floor materials and leveling materials, anti-slip sheets between floor materials and mortars, wall decorative sheets, decorative sheets, sitting chairs, Japanese kotatsu blankets, panel doors, pet mats, claw scratch protection sheets, pet slopes, rug covers, moisture-permeable waterproof sheets, weather shades, awnings, balcony decorative members, and soil covering materials such as house wraps and roofing.

Examples of the kitchen materials include kitchen cabinet sheets, refrigerator sheets, mesh cloths and kitchen sheets.

Examples of the apparel materials include headgears, cold weather apparels, underwear (such as shirts, briefs, belly bands, half-long pants, patches, shorts, girdles, petticoats, leggings, socks and tights), and sweat-absorbing sheets and sweat-permeable sheets used in sports apparels, casual apparels and the like.

### EXAMPLES

The present invention will be described in greater detail hereinbelow based on Examples, Comparative Examples and other experiments. However, it should be construed that the scope of the present invention is not limited to such examples. In Production Examples 1 to 6 described later, monomers and other compounds were used after being dried and purified by conventional methods and degassed with nitrogen. Further, the monomers and other compounds were transferred and supplied to the reaction system in a nitrogen atmosphere.

The weight average molecular weight (Mw) and number average molecular weight (Mn) of polymers, block copolymers and random copolymers obtained in examples described later were determined as polystyrene-equivalent molecular weights by GPC. The molecular weight distribution (Mw/Mn) was calculated from these molecular weights. The measurement device and conditions used in GPC are as follows.

### [GPC measurement device and conditions]

•Device: GPC device "HLC-8020" manufactured by TOSOH CORPORATION.
•Separation columns: "TSKgel GMHXL", "G4000HXL" and "G5000HXL" manufactured by TOSOH CORPORATION were connected in series.
•Eluent: Tetrahydrofuran.
•Eluent flow rate: 1.0 ml/min.
•Column temperature: 40°C.
•Detection method: Differential refractive index (RI) .

In the examples described later, the contents of polymer blocks in block copolymers were determined by ¹H-NMR measurement. The measurement device and conditions used in ¹H-NMR measurement are as follows.

### [¹H-NMR measurement device and conditions]

- Device: Nuclear magnetic resonance apparatus "JNM-LA400" manufactured by JEOL Ltd.
- Deuterated solvent: Deuterated chloroform.

In a ¹H-NMR spectrum, signals near 3.6 ppm, 3.7 ppm and 4.0 ppm are assigned to the ester group (-O-CH₃) in a methyl methacrylate unit, to the ester group (-O-CH₃) in a methyl acrylate unit, and to the ester group (-O-CH₂-CH₂-CH₂-CH₃) in an n-butyl acrylate unit, respectively. The molar ratio of the monomer units was determined from the integral ratio of these signals, and was converted to a mass ratio based on the molecular weights of the respective monomer units. The contents of the respective polymer blocks were thus determined.

### [Breathability 1]

Acrylic triblock copolymers of Production Examples 1 to 4, blends of Examples 5 to 7, a styrenic triblock copolymer of Comparative Example 3 and a thermoplastic polyurethane elastomer of Comparative Example 5 were each formed into a 100 µm thick flat layer and transferred in the molten state to one side of a 95 µm thick polyester nonwoven fabric (15TH-36 manufactured by HIROSE PAPER MFG CO., LTD.) as a substrate by a known printing method. Thus, laminates having an unperforated structural body were fabricated. The breathability of the acrylic triblock copolymers themselves, the styrenic triblock copolymer itself, the thermoplastic polyurethane elastomer itself and the blends themselves was evaluated by measurement in accordance with JIS Z0208 (method B) in an atmosphere at 40°C and 90% RH.

### [Breathability 2]

Laminates obtained in Examples 1 to 7 and 11 and Comparative Examples 1 and 3, which each included an unperforated substrate and a structural body including a base portion and through holes (or an unperforated structural body), were cut into a width of 10 mm and a length of 100 mm. The cutout pieces were each applied onto a wooden board that had been stored in a humidity conditioned environment at 40°C and 90% RH, and humidified air at 40°C and 90% RH was supplied from the lower side of the wooden board. Breathability 2 was judged by sensibility evaluation of adhesion based on two criteria. The laminate of Example 11 had structural bodies on both sides thereof. Prior to the evaluation of Breathability 2 of this laminate in the aforementioned manner, the surface of the structural body on one side was covered with a PET film and thereafter the structural body on the other side was applied to a wooden board.
1. Lifting occurred partially.
2. No lifting and no separation.

### [Breathability 3]

Laminates obtained in Examples 8 to 10 and Comparative Examples 2, 4 and 5, which each included a nonwoven fabric substrate and a structural body including a base portion and through holes, were applied to the body, and the wetness caused by perspiration was evaluated by sensory testing based on three criteria.
1. The laminate was significantly wet with perspiration and became wrinkled.
2. The laminate was wet with perspiration but was not wrinkled.
3. The laminate was dry without wetness.

### [Weight saving]

In a structural body including a base portion and through holes, the proportion of the through holes was calculated as the void content. When the void content was 50% or more, weight saving was judged as satisfactory and was rated as "O". When the void content was less than 50%, weight saving was judged as unsatisfactory and was rated as "Δ".

### [Adhesive residue]

Laminates obtained in Examples 1 to 10 and Comparative Examples 1 to 5 were each cut into a width of 10 mm and a length of 100 mm. The cutout pieces of the laminates were applied to a glass plate through the structural body and a 2 kg roller was moved back and forth two times to press the laminate against the glass plate. Evaluation samples were thus fabricated. After the evaluation samples were allowed to stand at room temperature for 24 hours, the laminates were peeled off and the glass surface was visually inspected. The adhesive residue was evaluated as "absent" when there was no adhesive or other residue and the adherend (the glass plate) was free from contamination, and was evaluated as "present" when the adherend had been contaminated with adhesive or other residue.

### [Plasticizer migration resistance]

Laminates obtained in Examples 1 to 10 and Comparative Examples 1 to 5 were each cut into a width of 10 mm and a length of 100 mm. The cutout pieces were each applied to a 1 mm thick, soft polyvinyl chloride (PVC) sheet (HISHIPRENE SHEET XS-004 manufactured by DiaPlus Film Inc., containing 94 phr plasticizer) through the structural body including a base portion and through holes. A 2 kg roller was moved back and forth two times to press the laminate against the sheet. Evaluation samples were thus fabricated. The laminate of Example 11 had structural bodies on both sides thereof. Thus, the surface of one structural body was covered with a PET film, and thereafter the structural body on the other side was applied to a soft polyvinyl chloride (PVC) sheet in the manner described above. The evaluation samples were allowed to stand at room temperature for 5 days, and thereafter the laminates were peeled. The surface of the structural body including a base portion and through holes, and the surface of the 1 mm thick, soft PVC sheet were visually inspected. The rating was "absent" when there was almost no plasticizer migration from the soft PVC sheet (1 mm thick) as the adherend, and the adherend was free from adhesive residue or any other contamination. The rating was "present" when adhesive or other residue stemming from plasticizer migration was found and the adherend had been contaminated.

### [Fitting properties]

Laminates obtained in Examples 1 to 10 and Comparative Examples 1 to 5 were each cut into a single sheet of a test piece 50 mm in length and 50 mm in width. The test pieces of the laminates were each set on a 95 µm polyester nonwoven fabric (15TH-36 manufactured by HIROSE PAPER MFG CO., LTD.) on which a positioning mark of the above size had been formed. A 2 kg roller was moved back and forth two times to press the test pieces against the nonwoven fabric. In Example 11, the laminate obtained was cut into a single sheet of a test piece 50 mm in length and 50 mm in width and was interposed between two sheets of a 95 µm polyester nonwoven fabric (15TH-36 manufactured by HIROSE PAPER MFG CO., LTD.) on which a positioning mark of the above size had been formed. A 2 kg roller was moved back and forth two times to press the test piece against the nonwoven fabric. The fitting properties were evaluated as "A" when the test piece was not misaligned from the positioning mark, and was rated as "B" when any misalignment was found.

### [Bond strength 1 with respect to highly polar adherends]

Laminates obtained in Examples 1 to 10 and Comparative Examples 1 to 5 were each cut into a test piece having a width of 10 mm and a length of 140 mm. An aluminum foil (RANAFOIL E manufactured by TOYO ALUMINIUM K.K., double-side roughened type, 80 µm) was set in contact with the substrate side of the test piece. Thereafter, the test piece was set on a 1 mm thick adherend (a SUS (stainless steel) substrate or an aluminum substrate) so that the structural body of the test piece would be in contact with the adherend. The unit was pressure bonded at 110°C and was stored at room temperature (23°C) for 24 hours. Thereafter, the test piece was peeled at 180° angle at 23°C and a speed of 50 mm/min with Instron universal tester "5566" in accordance with ISO 29862 to determine the interlayer bond strength.

### [Bond strength 2 with respect to highly polar adherends]

Laminate obtained in Example 11 was cut into a test piece having a width of 10 mm and a length of 140 mm. The test piece obtained was interposed between 1 mm thick SUS substrates. The unit was pressure bonded at 110°C and was stored at room temperature (23°C) for 24 hours. The bonding condition was then examined.

### «Production Example 1)) [Production of acrylic triblock copolymer (I-1)]

(1) A 2 L three-necked flask was equipped with a three-way cock and was purged with nitrogen. While performing stirring at room temperature, the flask was loaded with 938 g of toluene and 20.2 g of 1,2-dimethoxyethane, subsequently loaded with 41.4 g of a toluene solution containing 20.8 mmol of isobutylbis(2,6-di-t-butyl-4-methylphenoxy)aluminum, and further loaded with 1.53 g of a sec-butyllithium in cyclohexane solution containing 2.60 mmol of sec-butyllithium.
(2) Subsequently, 21.8 g of methyl methacrylate was added at room temperature while performing stirring, and the mixture was continuously stirred for 60 minutes. The reaction liquid was yellow at first and became colorless after the 60 minutes of stirring.
(3) Thereafter, the internal temperature of the polymerization liquid was cooled to -30°C, and 246 g of a mixture liquid containing methyl acrylate and n-butyl acrylate (75/25 by mass) was added dropwise over a period of 2 hours while performing stirring. After the completion of the dropwise addition, stirring was continued at -30°C for another 5 minutes.
(4) Thereafter, 25.2 g of methyl methacrylate was added, and the mixture was stirred at room temperature overnight.
(5) The polymerization reaction was terminated by the addition of 12.2 g of methanol, and the reaction liquid obtained was poured into 15 kg of methanol while performing stirring to precipitate a white deposit. The resultant white deposit was recovered and was dried to give 260 g of an acrylic triblock copolymer (I-1). The acrylic triblock copolymer (I-1) thus obtained was analyzed by GPC in accordance with the process described hereinabove to determine the weight average molecular weight (Mw) and the number average molecular weight (Mn), from which (Mw/Mn) was calculated. Further, the total content of the polymer blocks composed of methyl methacrylate units in the acrylic triblock copolymer (I-1) was determined by the ¹H-NMR measurement described hereinabove.

The properties of the acrylic triblock copolymer (I-1) are described in Table 1.

### «Production Example 2» [Production of acrylic triblock copolymer (I-2)]

(1) A 2 L three-necked flask was equipped with a three-way cock and was purged with nitrogen. While performing stirring at room temperature, the flask was loaded with 938 g of toluene and 20.2 g of 1,2-dimethoxyethane, subsequently loaded with 41.4 g of a toluene solution containing 20.8 mmol of isobutylbis(2,6-di-t-butyl-4-methylplienoxy)aluminum, and further loaded with 1.53 g of a sec-butyllithium in cyclohexane solution containing 2.60 mmol of sec-butyllithium.
(2) Subsequently, 21.8 g of methyl methacrylate was added at room temperature while performing stirring, and the mixture was continuously stirred for 60 minutes. The reaction liquid was yellow at first and became colorless after the 60 minutes of stirring.
(3) Thereafter, the internal temperature of the polymerization liquid was cooled to -30°C, and 246 g of a mixture liquid containing methyl acrylate and n-butyl acrylate (50/50 by mass) was added dropwise over a period of 2 hours while performing stirring. After the completion of the dropwise addition, stirring was continued at -30°C for another 5 minutes.
(4) Thereafter, 25.2 g of methyl methacrylate was added, and the mixture was stirred at room temperature overnight.
(5) The polymerization reaction was terminated by the addition of 12.2 g of methanol, and the reaction liquid obtained was poured into 15 kg of methanol while performing stirring to precipitate a white deposit. The resultant white deposit was recovered and was dried to give 260 g of an acrylic triblock copolymer (1-2). The acrylic triblock copolymer (1-2) thus obtained was analyzed by GPC in accordance with the process described hereinabove to determine the weight average molecular weight (Mw) and the number average molecular weight (Mn), from which (Mw/Mn) was calculated. Further, the total content of the polymer blocks composed of methyl methacrylate units in the acrylic triblock copolymer (I-2) was determined by the ¹H-NMR measurement described hereinabove. The properties of the acrylic triblock copolymer (1-2) are described in Table 1.

### «Production Example 3» [Production of acrylic triblock copolymer (I-3)]

(1) A 2 L three-necked flask was equipped with a three-way cock and was purged with nitrogen. While performing stirring at room temperature, the flask was loaded with 1154 g of toluene and 24.9 g of 1,2-dimethoxyethane, subsequently loaded with 37.8 g of a toluene solution containing 19.0 mmol of isobutylbis(2,6-di-t-butyl-4-methylphenoxy)aluminum, and further loaded with 1.89 g of a sec-butyllithium in cyclohexane solution containing 3.22 mmol of sec-butyllithium.
(2) Subsequently, 22.9 g of methyl methacrylate was added at room temperature while performing stirring, and the mixture was continuously stirred for 60 minutes. The reaction liquid was yellow at first and became colorless after the 60 minutes of stirring.
(3) Thereafter, the internal temperature of the polymerization liquid was cooled to -30°C, and 150 g of a mixture liquid containing methyl acrylate and n-butyl acrylate (20/80 by mass) was added dropwise over a period of 2 hours while performing stirring. After the completion of the dropwise addition, stirring was continued at -30°C for another 5 minutes.
(4) Thereafter, 38.2 g of methyl methacrylate was added, and the mixture was stirred at room temperature overnight.
(5) The polymerization reaction was terminated by the addition of 12.2 g of methanol, and the reaction liquid obtained was poured into 15 kg of methanol while performing stirring to precipitate a white deposit. The resultant white deposit was recovered and was dried to give 200 g of an acrylic triblock copolymer (1-3). The acrylic triblock copolymer (I-3) thus obtained was analyzed by GPC in accordance with the process described hereinabove to determine the weight average molecular weight (Mw) and the number average molecular weight (Mn), from which (Mw/Mn) was calculated. Further, the total content of the polymer blocks composed of methyl methacrylate units in the acrylic triblock copolymer (I-3) was determined by the ¹H-NMR measurement described hereinabove.

The properties of the acrylic triblock copolymer (I-3) are described in Table 1.

### «Production Example 4» [Synthesis of acrylic triblock copolymer (I-4)]

(1) A 2 L three-necked flask was equipped with a three-way cock and was purged with nitrogen. While performing stirring at room temperature, the flask was loaded with 936 g of toluene and 51.4 g of 1,2-dimethoxyethane, subsequently loaded with 32.9 g of a toluene solution containing 16.5 mmol of isobutylbis(2,6-di-t-butyl-4-methylphenoxy)aluminum, and further loaded with 4.10 g of a sec-butyllithium in cyclohexane solution containing 7.00 mmol of sec-butyllithium.
(2) Subsequently, 65.0 g of methyl methacrylate was added at room temperature while performing stirring, and the mixture was continuously stirred for 60 minutes. The reaction liquid was yellow at first and became colorless after the 60 minutes of stirring.
(3) Thereafter, the internal temperature of the polymerization liquid was cooled to -30°C, and 226 g of n-butyl acrylate was added dropwise over a period of 2 hours while performing stirring. After the completion of the dropwise addition, stirring was continued at -30°C for another 5 minutes.
(4) Thereafter, 161 g of methyl methacrylate was added, and the mixture was stirred at room temperature overnight.
(5) The polymerization reaction was terminated by the addition of 13.7 g of methanol, and the reaction liquid obtained was poured into 15 kg of methanol while performing stirring to precipitate a white deposit. The resultant white deposit was recovered and was dried to give 430 g of an acrylic triblock copolymer (I-4). The acrylic triblock copolymer (1-4) thus obtained was analyzed by GPC in accordance with the process described hereinabove to determine the weight average molecular weight (Mw) and the number average molecular weight (Mn), from which (Mw/Mn) was calculated. Further, the total content of the polymer blocks composed of methyl methacrylate units in the acrylic triblock copolymer (1-4) was determined by the ¹H-NMR measurement described hereinabove. The properties of the acrylic triblock copolymer (I-4) are described in Table 1.

### «Production Example 5» [Synthesis of acrylic triblock copolymer (I-5)]

(1) A 2 L three-necked flask was equipped with a three-way cock and was purged with nitrogen. While performing stirring at room temperature, the flask was loaded with 936 g of toluene and 51.4 g of 1,2-dimethoxyethane, subsequently loaded with 32.9 g of a toluene solution containing 16.5 mmol of isobutylbis(2,6-di-t-butyl-4-methylphenoxy)aluminum, and further loaded with 3.88 g of a sec-butyllithium in cyclohexane solution containing 6.62 mmol of sec-butyllithium.
(2) Subsequently, 52.9 g of methyl methacrylate was added at room temperature while performing stirring, and the mixture was continuously stirred for 60 minutes. The reaction liquid was yellow at first and became colorless after the 60 minutes of stirring.
(3) Thereafter, the internal temperature of the polymerization liquid was cooled to -30°C, and 226 g of n-butyl acrylate was added dropwise over a period of 2 hours while performing stirring. After the completion of the dropwise addition, stirring was continued at -30°C for another 5 minutes.
(4) Thereafter, 46.2 g of methyl methacrylate was added, and the mixture was stirred at room temperature overnight.
(5) The polymerization reaction was terminated by the addition of 13.7 g of methanol, and the reaction liquid obtained was poured into 15 kg of methanol while performing stirring to precipitate a white deposit. The resultant white deposit was recovered and was dried to give 300 g of an acrylic triblock copolymer (1-5). The acrylic triblock copolymer (1-5) thus obtained was analyzed by GPC in accordance with the process described hereinabove to determine the weight average molecular weight (Mw) and the number average molecular weight (Mn), from which (Mw/Mn) was calculated. Further, the total content of the polymer blocks composed of methyl methacrylate units in the acrylic triblock copolymer (I-5) was determined by the ¹H-NMR measurement described hereinabove. The properties of the acrylic triblock copolymer (I-5) are described in Table 1.

### «Production Example 6» [Production of styrenic triblock copolymer]

A pressure vessel equipped with a stirrer was loaded with 23 kg of cyclohexane and 99 ml of sec-butyllithium (11 mass%, cyclohexane solution), and 467 g of styrene was added to this solution over a period of 30 minutes. Polymerization was performed at 50°C for 30 minutes. Subsequently, 6380 g of isoprene was added over a period of 60 minutes, and polymerization was carried out at 50°C for 90 minutes. Thereafter, 467 g of styrene was added over a period of 30 minutes, and polymerization was performed at 50°C for 30 minutes. A reaction mixture liquid was thus obtained which included a polystyrene-polyisoprene-polystyrene triblock copolymer (hereinafter, referred to as the styrenic triblock copolymer (A-1)). The weight average molecular weight of the styrenic triblock copolymer (A-1) was 95000, and the styrene content measured by ¹H-NMR was 18 mass%.

To the reaction mixture liquid including the styrenic triblock copolymer (A-1) was added a hydrogenation catalyst which had been prepared separately by adding 460 g of triisopropylaluminum (20 mass%, cyclohexane solution) to 90 g of nickel octylate (64 mass%, cyclohexane solution). Hydrogenation reaction was carried out in a hydrogen atmosphere at 80°C and 1 MPa to produce a hydrogenated product of the polystyrene-polyisoprene-polystyrene triblock copolymer (hereinafter, this hydrogenated product will be referred to as the styrenic triblock copolymer (I'-1)). The weight average molecular weight of the styrenic triblock copolymer (I'-1) was 102000, and the styrene content and the hydrogenation ratio measured by ¹H-NMR were 17 mass% and 99%, respectively.

Table 1 describes the block structures, the weight average molecular weights (Mw), the molecular weight distributions (Mw/Mn), the total contents of the PMMA polymer blocks (the polymer blocks composed of 100 mass% of methyl methacrylate units) constituting the polymer blocks (A), the constituent components of the polymer block (B) and the mass ratio in the polymer block (B), of the acrylic triblock copolymers (I-1) to (1-5) obtained in Production Examples 1 to 5. In Table 1, PMMA indicates a polymer block composed of 100 mass% of methyl methacrylate units, PMA/PnBA a block consisting solely of methyl acrylate units and n-butyl acrylate units, and PnBA a block composed of 100 mass% of n-butyl acrylate units.

**[Table 1]**

| | Block structure | Weight average molecular weight Mw | Molecular weight distribution Mw/Mn | Total content (mass%) of polymer blocks (A1) and (A2) | Configuration (mass ratio) of polymer block (B) |
|---|---|---|---|---|---|
| I-1 | PMMA-PMA/PnBA-PMMA | 150000 | 1.2 | 15.8 | MA/nBA = 75/25 |
| I-2 | PMMA-PMA/PnBA-PMMA | 147000 | 1.2 | 16.1 | MA/nBA = 50/50 |
| I-3 | PMMA-PMA/PnBA-PMMA | 82000 | 1.1 | 28.8 | MA/nBA = 20/80 |
| I-4 | PMMA-PnBA-PMMA | 62000 | 1.1 | 50.0 | MA/nBA = 0/100 |
| I-5 | PMMA-PnBA-PMMA | 60000 | 1.1 | 30.5 | MA/nBA = 0/100 |

### «Example 1» [Production of laminate (II-1) having substrate, and structural body including base portion and through holes]

By a known pattern printing method, the acrylic triblock copolymer (I-1) obtained in Production Example 1 was formed into a patterned layer which had recesses and bumps of Mesh Shape 1 (size of through holes: 800 µm in length and width, width of base portion: 300 µm, thickness: 100 µm) and was transferred in the molten state onto one side of a 100 µm thick polyvinyl chloride (PVC) substrate film (manufactured by AS ONE Corporation). Thus, a laminate was fabricated which included a substrate, and a structural body (basis weight: 58 g/m²) including a base portion and through holes.

### «Examples 2 and 3» [Production of laminates (II-2 and II-3) having substrate, and structural body including base portion and through holes]

Laminates which included a substrate, and a structural body including a base portion and through holes were fabricated in the same manner as in Example 1, except that the acrylic triblock copolymer (I-1) was changed to the acrylic triblock copolymer (1-2) or (1-3) obtained in Production Example 2 or 3.

### «Example 4» [Production of laminate (II-4) having substrate, and structural body including base portion and through holes]

A laminate which included a substrate, and a structural body including a base portion and through holes was fabricated in the same manner as in Example 2, except that the shape of the through holes was changed to Mesh Shape 2 described in Table 2.

### «Examples 5 to 7» [Production of laminates (II-5 to II-7) having substrate, and structural body including base portion and through holes]

In accordance with the formulation described in Table 2, two kinds of acrylic triblock copolymers described in Table 2 were melt-kneaded in a twin-screw extruder at 220°C, and the kneaded product was extruded and cut to give a blend. A laminate which included a substrate, and a structural body including a base portion and through holes was fabricated in the same manner as in Example 1, except that the acrylic triblock copolymer (I-1) was changed to the blend.

«Example 8» [Production of laminate (II-8) having substrate, and structural body including base portion and through holes]

A laminate which included a nonwoven fabric substrate, and a structural body including a base portion and through holes was fabricated in the same manner as in Example 1, except that the substrate was changed to a polyester nonwoven fabric (15TH-36 manufactured by HIROSE PAPER MFG CO., LTD., thickness: 95 µm) described in Table 2.

### «Examples 9 and 10» [Production of laminates (II-9 and II-10) having substrate, and structural body including base portion and through holes]

Laminates which included a nonwoven fabric substrate, and a structural body including a base portion and through holes were fabricated in the same manner as in Example 8, except that the acrylic triblock copolymer (I-1) was changed to the acrylic triblock copolymer (I-2) or (I-3).

### «Example 11» [Production of laminate (II-11) having substrate, and structural bodies including base portion and through holes]

By a known pattern printing method, the acrylic triblock copolymer (I-2) obtained in Production Example 2 was formed into a patterned layer which had recesses and bumps of Mesh Shape 1 (size of through holes: 800 µm in length and width, width of base portion: 300 µm, thickness: 100 µm) and was transferred in the molten state onto both sides of a polyvinyl chloride (PVC) substrate film (manufactured by AS ONE Corporation) having a thickness described in Table 4. Thus, a laminate was fabricated which included structural bodies (structural bodies 1 and 2) (basis weight: 58 g/m²) including a base portion and through holes on both sides of a substrate.

### «Comparative Example 1» [Production of laminate (III-1) having substrate and unperforated structural body]

By a known printing method, the acrylic triblock copolymer (1-2) obtained in Production Example 2 was formed into a 100 µm thick flat layer (basis weight: 110 g/m²) and was transferred in the molten state onto one side of a 100 µm thick PVC substrate film. Thus, a laminate which included a substrate and an unperforated structural body was fabricated.

### «Comparative Example 2» [Production of laminate (III-2) having substrate and unperforated structural body]

A laminate which included a nonwoven fabric substrate and an unperforated structural body was fabricated in the same manner as in Comparative Example 1, except that the substrate was changed to a polyester nonwoven fabric (15TH-36 manufactured by HIROSE PAPER MFG CO., LTD., thickness: 95 µm) described in Table 3.

### «Comparative Example 3» [Production of laminate (III-3) having substrate, and structural body including base portion and through holes]

A laminate which included a substrate, and a structural body including a base portion and through holes was fabricated in the same manner as in Example 1, except that the acrylic triblock copolymer (I-1) was changed to the styrenic triblock copolymer (I'-1) obtained in Production Example 5.

### «Comparative Example 4» [Production of laminate (III-4) having substrate, and structural body including base portion and through holes]

A laminate which included a nonwoven fabric substrate, and a structural body including a base portion and through holes was fabricated in the same manner as in Comparative Example 3, except that the substrate was changed to a polyester nonwoven fabric (15TH-36 manufactured by HIROSE PAPER MFG CO., LTD., thickness: 95 µm) described in Table 3.

### «Comparative Example 5» [Production of laminate (III-5) having substrate, and structural body including base portion and through holes]

A laminate which included a nonwoven fabric substrate, and a structural body including a base portion and through holes was fabricated in the same manner as in Example 8, except that the acrylic triblock copolymer (I-1) was changed to a thermoplastic polyurethane elastomer (Pearlthane U-204B manufactured by TOSOH CORPORATION) .

By the method for evaluating Breathability 1, the breathability was evaluated with respect to the polymers themselves and the blends themselves forming the base portions of the structural bodies. High breathability of not less than 400 g/m²·24 hr was achieved by the layers (each 100 µm thick) made of the acrylic triblock copolymers (I-1) to (I-3) themselves from Production Examples 1 to 3 and the blends themselves from Examples 5 to 7 which are the materials for forming the base portions of the structural bodies of the present invention, and the layer of the thermoplastic polyurethane elastomer used in Comparative Example 5. In contrast, the layer (100 µm thick) of the styrenic triblock copolymer itself used in Comparative Examples 3 and 4 exhibited a very poor breathability of 30 g/m²·24 hr.

As shown by the results of Examples 1 to 7 (Table 2), the laminates that included a polyvinyl chloride (PVC) substrate and a structural body including a base portion and through holes and satisfied the conditions of the present invention were rated as "2" in Breathability 2. By virtue of their high breathability, the laminates that included such a substrate and a structural body including such a base portion and through holes were scarcely influenced by humidified air and did not separate from the wooden boards. In the evaluation of their weight saving, all the structural bodies including a base portion and through holes had a void content of not less than 50%, and their weight saving was judged as satisfactory and was rated as "O". In the evaluation of plasticizer migration resistance, the visual inspection of the surface of the 1 mm thick, soft PVC sheets as the adherends found no adhesive or other residue stemming from the plasticizer migration from the soft PVC sheet (1 mm thick) as the adherend. The adherend contamination was thus evaluated as "absent". In the evaluation of fitting properties, the test pieces showed high fitting properties without any misalignment from the positioning mark and were rated as "A". Regarding the adhesion with respect to highly polar adherends, the test pieces showed high adhesion of not less than 15 N/10 mm with respect to both the SUS sheet and the aluminum sheet.

As shown by the results of Examples 8 to 10 (Table 2), the laminates that included a nonwoven fabric substrate and a structural body including a base portion and through holes and satisfied the conditions of the present invention were rated as "3" in Breathability 3, and were not wet with perspiration and were dry. In the evaluation of their weight saving, all the structural bodies including a base portion and through holes had a void content of not less than 50%, and their weight saving was judged as satisfactory and was rated as "O". In the evaluation of plasticizer migration resistance, the visual inspection of the surface of the 1 mm thick, soft PVC sheets as the adherends found no adhesive or other residue stemming from the plasticizer migration from the soft PVC sheet (1 mm thick) as the adherend. The adherend contamination was thus evaluated as "absent". In the evaluation of fitting properties, the test pieces showed high fitting properties without any misalignment from the positioning mark and were rated as "A". Regarding the adhesion with respect to highly polar adherends, the test pieces showed high adhesion of not less than 15 N/10 mm with respect to both the SUS sheet and the aluminum sheet.

As shown by the results of Example 11 (Table 4), the laminate that included structural bodies including a base portion and through holes on both sides of a substrate and satisfied the conditions of the present invention was rated as "2" in Breathability 2. By virtue of its high breathability, the laminate that included a substrate and structural bodies including a base portion and through holes was scarcely influenced by humidified air and did not separate from the wooden board. In the evaluation of weight saving, the structural bodies including a base portion and through holes had a void content of not less than 50%, and their weight saving was judged as satisfactory and was rated as "O". In the evaluation of plasticizer migration resistance, the visual inspection of the surface of the 1 mm thick, soft PVC sheet as the adherend found no adhesive or other residue stemming from the plasticizer migration from the soft PVC sheet (1 mm thick) as the adherend. The adherend contamination was thus evaluated as "absent". In the evaluation of fitting properties, the test piece showed high fitting properties without any misalignment from the positioning mark and was rated as "A". The stainless steel sheets were so strongly bonded to each other that they were not separated or even moved by hands.

In contrast, as shown by the results of Comparative Example 1 (Table 3), the laminate which included a PVC substrate and an unperforated structural body and did not satisfy the conditions of the present invention was rated as "1" in Breathability 2. Because of the absence of voids, the laminate was significantly influenced by humidified air and part of the structural body separated from the wooden board to cause lifting. Because the structural body was free from through holes and thus no weight was saved, its weight saving was rated as "Δ". In the evaluation of plasticizer migration resistance, the visual inspection of the surface of the 1 mm thick, soft PVC sheet as the adherend found no adhesive or other residue stemming from the plasticizer migration from the soft PVC sheet (1 mm thick) as the adherend. The adherend contamination was thus evaluated as "absent". In the evaluation of fitting properties, the test piece showed high fitting properties without any misalignment from the positioning mark and was rated as "A". Regarding the adhesion with respect to highly polar adherends, the test piece showed high adhesion of not less than 15 N/10 mm with respect to both the SUS sheet and the aluminum sheet.

As shown by the results of Comparative Example 2 (Table 3), the laminate which included a nonwoven fabric substrate and an unperforated structural body and did not satisfy the conditions of the present invention was rated as "1" in Breathability 3. Because of the absence of voids, much wetness was generated between the structural body and the body and the laminate easily became wrinkled. Because the structural body was free from through holes and thus no weight was saved, its weight saving was rated as "Δ". In the evaluation of plasticizer migration resistance, the visual inspection of the surface of the 1 mm thick, soft PVC sheet as the adherend found no adhesive or other residue stemming from the plasticizer migration from the soft PVC sheet (1 mm thick) as the adherend. The adherend contamination was thus evaluated as "absent". In the evaluation of fitting properties, the test piece showed high fitting properties without any misalignment from the positioning mark and was rated as "A". Regarding the adhesion with respect to highly polar adherends, the test piece showed high adhesion of not less than 15 N/10 mm with respect to both the SUS sheet and the aluminum sheet.

As shown by the results of Comparative Example 3 (Table 3), the laminate which included a PVC substrate and a structural body including a base portion and through holes and did not satisfy the conditions of the present invention was rated as "1" in Breathability 2. Although voids were present, the base portion of the perforated structural body was low in breathability and thus the structural body was significantly influenced by humidified air and partly separated from the wooden board to cause lifting. In the evaluation of its weight saving, the structural body including a base portion and through holes had a void content of not less than 50%, and its weight saving was judged as satisfactory and was rated as "O". In the evaluation of plasticizer migration resistance, the visual inspection of the surface of the 1 mm thick, soft PVC sheet as the adherend found adhesive or other residue stemming from the plasticizer migration from the soft PVC sheet (1 mm thick) as the adherend. The adherend contamination was thus evaluated as "present". In the evaluation of fitting properties, the test piece showed low fitting properties and was misaligned from the positioning mark, thus being rated as "B". Regarding the adhesion with respect to highly polar adherends, the test piece showed low adhesion of less than 15 N/10 mm with respect to both the SUS sheet and the aluminum sheet.

As shown by the results of Comparative Example 4 (Table 3), the laminate which included a nonwoven fabric substrate and a structural body including a base portion and through holes and did not satisfy the conditions of the present invention was rated as "2" in Breathability 3. Although voids were present, the base portion of the perforated structural body was low in breathability and thus wetness was generated between the structural body and the body to a degree that the laminate did not become wrinkled. In the evaluation of its weight saving, the structural body including a base portion and through holes had a void content of not less than 50%, and its weight saving was judged as satisfactory and was rated as "O". In the evaluation of plasticizer migration resistance, the visual inspection of the surface of the 1 mm thick, soft PVC sheet as the adherend found adhesive or other residue stemming from the plasticizer migration from the soft PVC sheet (1 mm thick) as the adherend. The adherend contamination was thus evaluated as "present". In the evaluation of fitting properties, the test piece showed low fitting properties and was misaligned from the positioning mark, thus being rated as "B". Regarding the adhesion with respect to highly polar adherends, the test piece showed low adhesion of less than 10 N/10 mm with respect to both the SUS sheet and the aluminum sheet.

As shown by the results of Comparative Example 5 (Table 3), the laminate which included a nonwoven fabric substrate and a structural body including a base portion and through holes and did not satisfy the conditions of the present invention was rated as "3" in Breathability 3, and was not wet with perspiration and was dry. In the evaluation of its weight saving, the structural body including a base portion and through holes had a void content of not less than 50%, and its weight saving was judged as satisfactory and was rated as "O"**.** In the evaluation of plasticizer migration resistance, the visual inspection of the surface of the 1 mm thick, soft PVC sheet as the adherend found no adhesive or other residue stemming from the plasticizer migration from the soft PVC sheet (1 mm thick) as the adherend. The adherend contamination was thus evaluated as "absent". In the evaluation of fitting properties, the test piece showed low fitting properties and was misaligned from the positioning mark, thus being rated as "B". Regarding the adhesion with respect to highly polar adherends, the test piece showed low adhesion of less than 15 N/10 mm with respect to both the SUS sheet and the aluminum sheet.

The laminates of the present invention include a substrate and a structural body which includes a base portion including an acrylic triblock copolymer, and through holes. From the foregoing, the laminates of the present invention have been shown to concurrently satisfy operability and stickiness during processes such as fitting, be releasable with no or little adhesive residue, and also exhibit excellent adhesion to various adherends, especially metals.

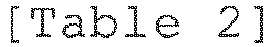

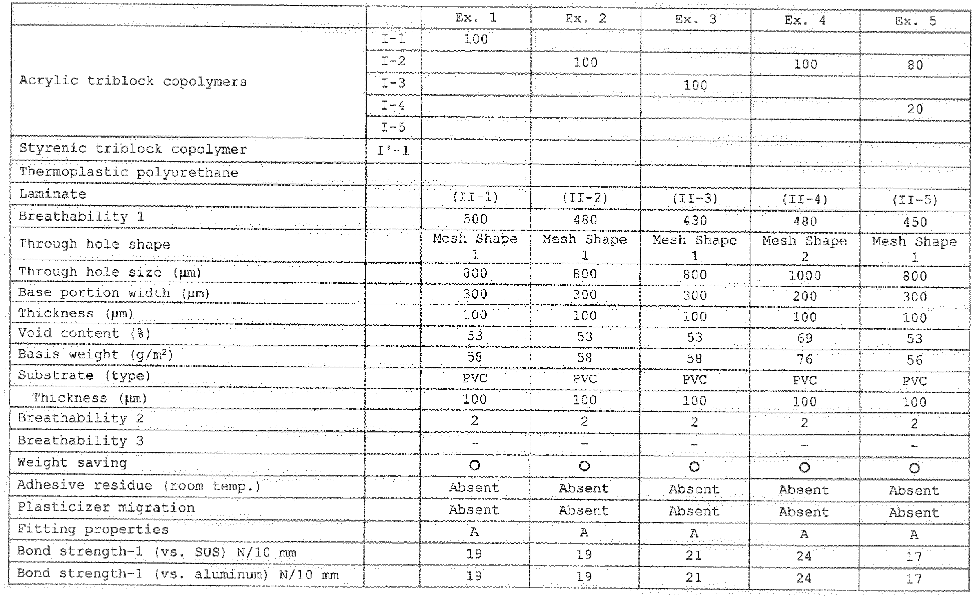

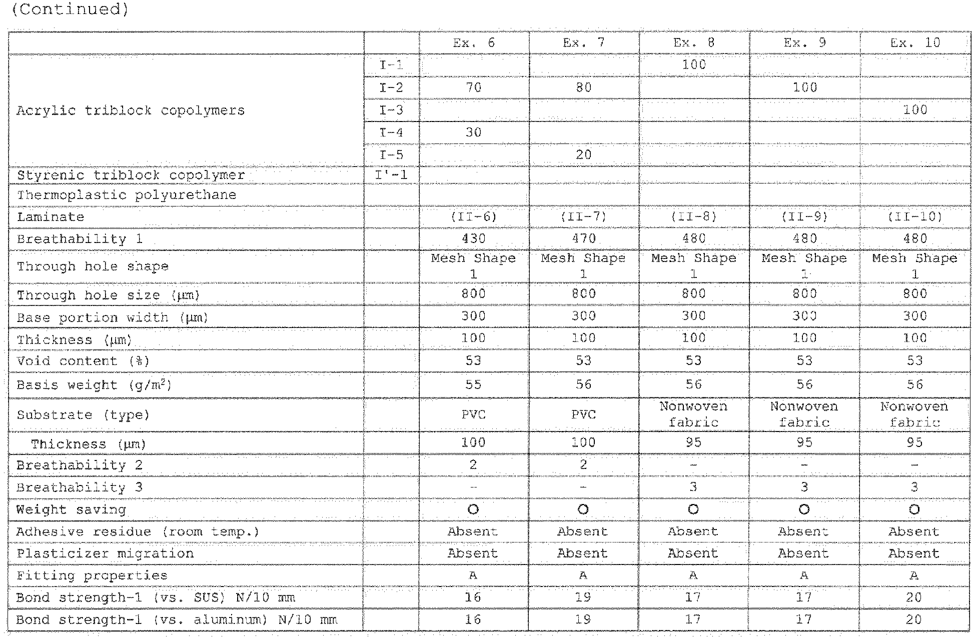

**[Table 3]**

| | | Comp. Ex. 1 | Comp. Ex. 2 | Comp. Ex. 3 | Comp. Ex. 4 | Comp. Ex. 5 |
|---|---|---|---|---|---|---|
| Acrylic triblock copolymers | I-1 | | | | | |
| | I-2 | 100 | 100 | | | |
| | I-3 | | | | | |
| | I-4 | | | | | |
| | I-5 | | | | | |
| Styrenic triblock copolymer | I'-1 | | | 100 | 100 | |
| Thermoplastic polyurethane | | | | | | 100 |
| Laminate | | (III-1) | (III-2) | (III-3) | (III-4) | (III-5) |
| Breathability 1 | | 480 | 480 | 30 | 30 | 400 |
| Through hole shape | | Flat shape | Flat shape | Mesh Shape 1 | Mesh Shape 1 | Mesh Shape 1 |
| Through hole size (µm) | | - | - | 800 | 800 | 800 |
| Base portion width (µm) | | - | - | 300 | 300 | 300 |
| Thickness (µm) | | 100 | 100 | 100 | 100 | 100 |
| Void content (%) | | 0 | 0 | 53 | 53 | 53 |
| Basis weight (g/m²) | | 110 | 110 | 48 | 48 | 64 |
| Substrate (type) | | PVC | Nonwoven fabric | PVC | Nonwoven fabric | Nonwoven fabric |
| Thickness (µm) | | 100 | 95 | 100 | 95 | 95 |
| Breathability 2 | | 1 | - | 1 | - | - |
| Breathability 3 | | - | 1 | - | 2 | 3 |
| Weight saving | | Δ | Δ | ○ | ○ | ○ |
| Adhesive residue (room temp.) | | Absent | Absent | Absent | Absent | Absent |
| Plasticizer migration | | Absent | Absent | Present | Present | Absent |
| Fitting properties | | A | A | B | B | B |
| Bond strength-1 (vs. SUS) N/10 mm | | 35 | 33 | 11 | 8 | 12 |
| Bond strength-1 (vs. aluminum) N/10 mm | | 32 | 30 | 8 | 9 | 12 |

**[Table 4]**

| | | Ex. 11 |
|---|---|---|
| Acrylic triblock copolymers | I-1 | |
| | I-2 | 100 |
| | I-3 | |
| | I-4 | |
| | I-5 | |
| Styrenic triblock copolymer | I'-1 | |
| Thermoplastic polyurethane | | |
| Laminate | | (II-11) |
| Structural body 1 including base portion and through holes | | Mesh Shape 1 |
| Substrate (type) | | PVC |
| Thickness (µm) | | 100 |
| Structural body 2 including base portion and through holes | | Mesh Shape 1 |
| Breathability 2 | | 2 |
| Breathability 3 | | - |
| Weight saving | | ○ |
| Plasticizer migration | | Absent |
| Fitting properties | | A |
| Bond strength-2 | | No misalignment, strong bond |

## Claims

1. A laminate comprising a substrate and a structural body disposed on the surface of at least one side of the substrate, the structural body comprising a base portion and a through hole, wherein
the base portion of the structural body comprises an acrylic triblock copolymer (I) comprising two polymer blocks (A1) and (A2) each including methacrylic acid ester units and one polymer block (B) including acrylic acid ester units represented by the general formula CH₂=CH-COOR¹ (1) (wherein R¹ denotes a C1-C3 organic group), the acrylic triblock copolymer (I) having an (A1)-(B)-(A2) block structure and a weight average molecular weight of 50,000 to 250,000, the total content of the polymer blocks (A1) and (A2) being not more than 35 mass% of the acrylic triblock copolymer (I).

2. A hot-melt adhesive member comprising the laminate described in Claim 1.
